# EUROPEAN PATENT APPLICATION

(11) **EP 4 831 113 A1**
(43) Date of publication of application: **28.10.2026**
(21) Application number: 25171982.9
(22) Date of filing: 23.04.2025
(51) Int. Cl.: C01B 3/04

(54) **AMMONIA CRACKING AND/OR FIRING INSTALLATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: CARDON, Guillaume, 75007 Paris (FR); JALLAIS, Simon, 75007 Paris (FR); ULBER, Dieter, 60439 Frankfurt am Main (DE); VICARI, Lorenzo, 60439 Frankfurt am Main (DE); LUTZ, Michael, 60439 Frankfurt am Main (DE)
(74) Representative: Air Liquide

(57) **Abstract**

The invention relates to an ammonia cracking and/or firing installation (1) comprising:
- a pressure equipment (2) for containing liquid ammonia;
- a basin (3) positioned beneath the pressure equipment (2), configured to collect and contain liquid ammonia in the event of a leak from the pressure equipment (2);
- a safety enclosure (4) surrounding the pressure equipment (2) and arranged to contain ammonia spurts and any gaseous ammonia resulting from a liquid or gas leak from the pressure equipment (2).

## Description

The present invention relates to an ammonia cracking and/or firing installation.

When a vessel, tank, or an equipment contains substantial quantities of a hazardous liquid, a single containment wall is often considered as insufficient. Governmental regulations, internal company standards, or safety assessments may necessitate a secondary layer of protection. This secondary containment is designed to prevent environmental spills and protect personnel if the first wall fails.

Examples related to ammonia include:
- Large-scale liquid ammonia storage tanks in tank farms, typically near ammonia import/export facilities at terminals/harbors. These tanks can be built with double walls and are capable of containing the liquid inventory of the tank.
- Equipment of chemical plants containing large volumes of hazardous liquids may utilize double walls designs. In the event of a primary wall leak or rupture, a secondary wall, designed to withstand the same pressure, prevents environmental contamination. This principle is also applied in ammonia cracking processes, where certain equipment, such as surge drums, may have double-walled design.

While double walls equipment offers preventing hazardous liquid spills, it is not always feasible, particularly for equipment with complex designs like ammonia vaporizers in ammonia cracking and/or firing plants. The ammonia vaporizer's design may incorporate two heat sources connected from opposite ends, with heat transfer made by internal tube bundles. The vessel requires numerous penetrations for piping, instrumentation, and drains.

Moreover, the ammonia vaporizer's shape may be complex, comprising a cylindrical portion for liquid and a dome for vapor phase. The dome directs vaporized ammonia to the outlet piping and may include a demister to minimize liquid droplet carryover.

Consequently, implementing a double wall around the ammonia vaporizer is challenging and economically prohibitive.

The invention aims to overcome at least some of the problems mentioned above.

For this purpose, the present invention relates to an ammonia cracking and/or firing installation comprising:
- a pressure equipment for containing liquid ammonia;
- a basin positioned beneath the pressure equipment, configured to collect and contain liquid ammonia in the event of a leak from the pressure equipment;
- a safety enclosure surrounding the pressure equipment and arranged to contain ammonia spurts and any gaseous ammonia resulting from a liquid or gas leak from the pressure equipment.

A pressure equipment according to the invention refers to an equipment configured to withstand a pressure of at least 490 millibars (mbar) over atmospheric pressure.

The pressure equipment according to the invention may be an equipment for a pressurized process.

The safety enclosure advantageously is further configured to reduce a heat transfer from outside the enclosure to the liquid ammonia that has leaked from said pressure equipment.

This allows reducing a vaporization rate of said liquid ammonia that has leaked from said pressure equipment. The impact of ammonia sprays and gaseous ammonia dispersion in the surrounding is thus reduced.

In one embodiment, the enclosure is surrounding the basin as well as the pressure equipment.

In one embodiment, the pressure equipment comprises an ammonia vaporizer.

In one embodiment, the pressure equipment comprises an ammonia pump.

In one embodiment, the pressure equipment comprises an ammonia vaporizer and a pump arranged for feeding liquid ammonia to said ammonia vaporizer.

In one embodiment, the basin has a volume at least equal to 40 %, or even 100% of the maximum liquid inventory (i.e. ammonia volume) in the pressure equipment.

In one embodiment, the ammonia vaporizer is configured to contain liquid ammonia as well as gaseous ammonia in a pressure range of 20 to 100 bar, preferably 30 to 60 bar.

In one embodiment, the ammonia vaporizer has an ammonia liquid inventory of 0.4 m³ to 20 m³, preferably 2 m³ to 10 m³.

In one embodiment, the safety enclosure is made of a single wall layer (without double walls).

In one embodiment, the safety enclosure comprises an assembly of metallic sheets.

In one embodiment, the assembly of metallic sheets comprises structural beams supporting said metallic sheets. In one embodiment, the structural beams are also supporting the basin.

For instance, the basin is made of concrete.

In one embodiment, the basin is arranged at ground level.

In one embodiment, the basin has raised walls.

In one embodiment, the basin is a separate component within the safety enclosure.

In one embodiment, in case the basin is a separate component within the safety enclosure, the basin has walls thicker than the walls of the safety enclosure.

In a variant, the basin is a part of the safety enclosure.

In one embodiment, the safety enclosure walls are arranged as an extension of the basin walls.

For instance, the basin is formed by the walls of the safety enclosure.

In one embodiment, where the basin forms a part of the safety enclosure, the regions of walls of the enclosure forming the basin may have a greater thickness compared to other regions of the safety enclosure, for instance an upper region of the enclosure.

The other regions of the safety enclosure, in this case, are mainly configured to reduce heat transfer and reduce the impact of ammonia sprays and gaseous ammonia dispersion in the surrounding instead of collecting and containing liquid ammonia.

An ammonia spray means in particular a stream comprising gaseous ammonia with finely dispersed ammonia droplets.

In one embodiment, the safety enclosure, in particular a section of the safety enclosure beneath the pressure equipment, comprises the basin.

In one embodiment, the ammonia installation further comprises at least one ammonia leak detection device.

The leak detection device is for example arranged within the safety enclosure or arranged outside the safety enclosure for analyzing a sample withdrawn from the safety enclosure.

In one embodiment, the at least one leak detection device comprises a temperature sensor, for example located within the basin.

This enables a temperature measurement, for example in the basin. As the ammonia in the ammonia vaporizer is not at ambient temperature, a spillage of liquid ammonia can be detected via the temperature sensor. Further, due to the sudden decrease in pressure in case of leak or rupture of the ammonia vaporizer, the temperature of the ammonia could decrease. Therefore, rapid temperature changes in the basin are an indication of a major ammonia leak.

In one embodiment, the at least one leak detection device comprises an ammonia gas detector.

In one embodiment, the ammonia gas detector is configured to be triggered upon detection of gaseous ammonia.

After a leak has been detected, the operator or an automatic system assesses the situation and activates appropriate responses.

In one embodiment, the safety enclosure is configured to be maintained at an overpressure between 10 mbar and 200 mbar inside said enclosure, in particular between 10 mbar and 20 mbar.

In one embodiment, the safety enclosure has a vent outlet configured to direct ammonia vapors to a safe location or to a flare.

The safety enclosure for example comprises a conduit for routing said ammonia vapors to said vent outlet.

The purpose is to avoid that ammonia sprays and vapors dissipate into the atmosphere forming a toxic and potentially dangerous cloud which can harm an operator.

The ammonia installation may further comprise blowers configured to enhance evacuation of ammonia vapors through said vent outlet.

In one embodiment, the safety enclosure is equipped with at least one safety valve and/or at least one rupture disc and/or a flap configured for the overpressure of the enclosure and configured to route the ammonia vapors to a safe location or to the flare.

Such a flap may be configured to close again after an over-pressure event and can be reused.

In one embodiment, the vent is sized such that a safety valve is not required.

In one embodiment, the top of the enclosure is at a height that directly counts as a safe location without further piping.

This can be achieved by a tall enclosure or by locating the ammonia vaporizer, basin and enclosure at appropriate height.

In one embodiment, said safe location is arranged at a height of at least 2 meters above surrounding structures where operator presence is frequent.

In one embodiment, the safety enclosure is at least partially dismantlable.

The enclosure can be, at least partially, easily dismantled to have easy access to heating tubes of the ammonia vaporizer for their maintenance and/or replacement, together with an easy access to any part within the enclosure that requires maintenance or repair.

In one embodiment, the vaporizer is positioned at a distance from the internal walls of the safety enclosure sufficient to permit maintenance operations on the vaporizer without requiring disassembly of the safety enclosure, access to the vaporizer being in particular provided via a manhole in the safety enclosure.

In one embodiment, the installation comprises a heating element located within the basin to support slow vaporization of the contained ammonia after a leak event.

Evaporation leads to ammonia removal from the basin.

Therefore, repair works can start and a potential downtime of the plant/installation can be reduced. This is especially the case after a full rupture where large amounts of ammonia have been released from the pressure equipment.

In one embodiment, piping connections within the enclosure are welded.

In one embodiment, the basin comprises a sealed opening and the installation comprises at least one piping extending through said sealed opening and arranged for discharging a blow down stream from said ammonia vaporizer or from said ammonia fuel vaporizer and/or arranged for draining a liquid by gravity.

In one embodiment, said at least one piping comprises for example a blowdown line for discharging said blow down stream.

The installation may comprise an ammonia drum for receiving the discharged blow down stream.

The liquid ammonia blowdown is discharged by gravity flow to the ammonia drum.

Alternatively, the heating element can be located in or around the ammonia drum.

In one embodiment, the blowdown line is equipped with an automatic valve configured to open upon detection of a leak and/or instruments relevant for measurements and/or controlling the equipment inside the safety enclosure are accessible from outside the safety enclosure.

In one embodiment, the pressure equipment comprises an ammonia fuel vaporizer contained within the safety enclosure.

In one embodiment, the pressure equipment comprises an ammonia surge drum.

In one embodiment, the installation comprises means, such as an inert gas purge system, for keeping the safety enclosure oxygen free, for example means for continuously purging the enclosure with gaseous nitrogen to keep said enclosure free of oxygen.

Said means are advantageously configured to maintain said overpressure between 10 mbar and 200 mbar, in particular between 10 mbar and 20 mbar.

In one embodiment, the safety enclosure is filled with a thermal insulation medium, for example a granular insulation medium, for reducing heat losses from the pressure equipment.

This is to insulate the equipment inside the enclosure during normal operation (without any leak).

This can partially or completely replace the direct insulation around the ammonia containing equipment and piping within the enclosure.

In one embodiment, the installation comprises an insulation layer around said enclosure, for reducing heat losses from the pressure equipment.

An insulation can also be applied inside the safety enclosure directly around the vaporizer (and potentially other equipment in there).

In one embodiment, the installation further comprises a gas conversion unit. Said gas conversion unit may be a reformer or an ammonia cracker.

The pressure equipment, typically said ammonia vaporizer, is configured to supply ammonia, in particular vaporized ammonia, as a feed to said gas conversion unit to produce hydrogen from a cracking reaction of said ammonia.

In one embodiment, the pressure equipment, typically said ammonia fuel vaporizer, is configured to supply ammonia, in particular vaporized ammonia, as a fuel to provide heat for performing an endothermic reaction in said gas conversion unit.

The reformer is configured to produce hydrogen by hydrocarbon reforming, such as steam methane reforming (SMR) or auto-thermal reforming (ATR), which produces a hydrogen-rich syngas.

The reformer comprises catalyst filled tubes for performing said hydrocarbon reforming reaction.

The ammonia cracker comprises catalyst filled tubes for performing said cracking reaction. Alternatively, the ammonia cracker is configured to produce hydrogen by autothermal cracking.

In one embodiment, the installation comprises a tubing extending from the safety enclosure to an analyzer configured to receive and analyze the gas in the enclosure. In particular, small leaks do not trigger the temperature sensor.

The present invention also relates to a process for the production of hydrogen, comprising the steps of:
- providing an ammonia installation as described above;
- providing liquid ammonia to the pressure equipment within the installation;
- supplying ammonia derived from said liquid ammonia (for example vaporized ammonia) to a gas conversion unit with the pressure equipment;
- converting the ammonia derived from said liquid ammonia to hydrogen within the gas conversion unit and/or performing a combustion reaction of said ammonia derived from said liquid ammonia to provide heat for performing an endothermic reaction in said gas conversion unit.

In one embodiment, the gas conversion unit is an ammonia cracker.

In a variant, the gas conversion unit is a reformer or any other gas conversion unit arranged to be supplied by heat from a combustion process.

In one embodiment, the process further comprises:
- detecting a leak of liquid ammonia within the installation using at least one leak detection device located within the safety enclosure;
- activating a safety protocol upon detection of the leak.

In one embodiment, the safety protocol includes directing ammonia vapors to a flare or safe location.

The safety protocol may include continuing the operation of the installation.

Thanks to the invention, with the basin and the safety enclosure, the risk of dangerous ammonia leaks and the formation of hazardous vapor clouds is substantially mitigated. The basin captures any liquid ammonia leak, while the enclosure contains and directs any vaporized ammonia or ammonia spray to a safe disposal. The invention enhances safety and environmental protection and also minimizes costs by facilitating quicker leak detection

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

### BRIEF DESCRIPTION OF DRAWINGS

Note that all of the features and configurations described above are purely examples. Other features, details and advantages of the invention will become clearer on reading the detailed description set out below, together with several embodiments provided purely as examples and by way of indication, with reference to the attached schematic drawings, in which:
Figure 1 is a schematic representation of an installation, in accordance with one embodiment of the present invention;
Figure 2 is a schematic representation of an installation, in accordance with another embodiment of the present invention.

Throughout the description, identical elements or elements with the same function are designated by the same reference sign.

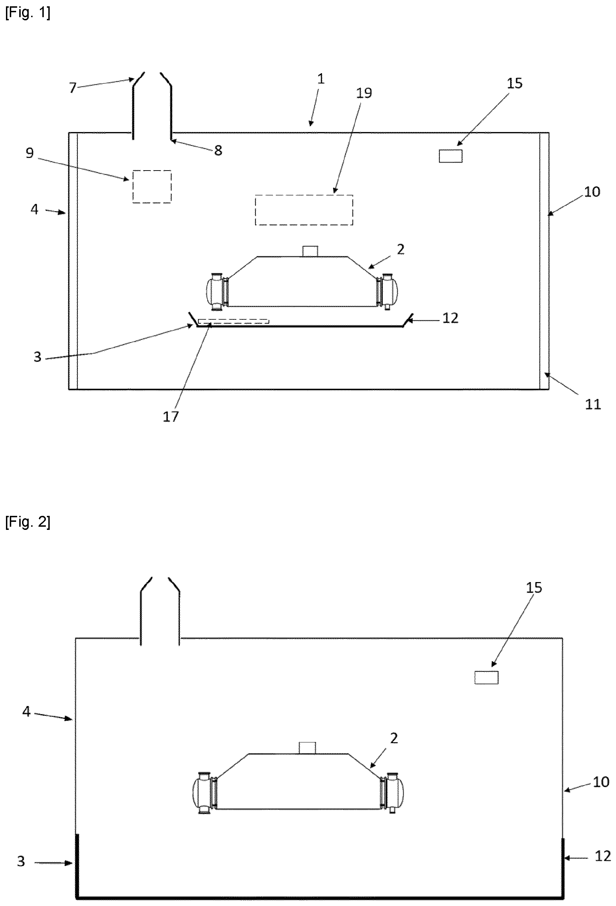

Figure 1 shows an ammonia cracking and/or firing installation 1 comprising:
- a pressure equipment 2 for containing liquid ammonia;
- a basin 3 positioned beneath the pressure equipment 2, configured to collect and contain liquid ammonia in the event of a leak from the pressure equipment 2;
- a safety enclosure 4 surrounding the pressure equipment 2 and arranged to contain ammonia spurts and any gaseous ammonia resulting from a liquid or gas leak from the pressure equipment 2.

The pressure equipment 2 is configured to withstand a pressure of at least 490 millibars (mbar) over atmospheric pressure.

The pressure equipment 2 comprises an ammonia vaporizer and a pump (not illustrated) arranged for feeding liquid ammonia to said ammonia vaporizer.

The enclosure 4 is surrounding the basin 3 as well as the pressure equipment 2.

The basin 3 has a volume at least equal to 40 %, or even 100% of the maximum liquid inventory (i.e. ammonia volume) in the pressure equipment 2.

The ammonia vaporizer 2 is configured to contain liquid ammonia as well as gaseous ammonia in a pressure range of 20 to 100 bar, preferably 30 to 60 bar.

The ammonia vaporizer has an ammonia liquid inventory of 0.4 m³ to 20 m³, preferably 2 m³ to 10 m³.

The safety enclosure 4 is made of a single wall layer 10, without double walls. In particular, the wall layer 10 comprises an assembly of metallic sheets and structural beams 11 supporting said metallic sheets. The structural beams 11 are also supporting the basin 3.

The basin 3 is a separate component within the safety enclosure 4.

For instance, the basin 3 is made of concrete, and is arranged at ground level.

The basin 3 has raised walls 12.

Generally speaking, the basin 3 may have walls thicker than the walls 10 of the safety enclosure 4.

The ammonia installation 1 further comprises at least one ammonia leak detection device 15.

The leak detection device 15 is for example arranged within the safety enclosure 4.

The leak detection device 15 comprises a temperature sensor located within the basin 3. This enables a temperature measurement in the basin 3. As the ammonia in the ammonia vaporizer is not at ambient temperature, a spillage of liquid ammonia can be detected via the temperature sensor. Further, due to the sudden decrease in pressure in case of leak or rupture of the ammonia vaporizer, the temperature of the ammonia could decrease. Therefore, rapid temperature changes in the basin 3 are an indication of a major ammonia leak.

In a variant, the leak detection device 15 comprises an ammonia gas detector configured to be triggered upon detection of gaseous ammonia.

After a leak has been detected, the operator or an automatic system assesses the situation and activates appropriate responses.

The safety enclosure 4 is typically configured to be maintained at an overpressure between 10 mbar and 200 mbar over atmospheric pressure inside said enclosure, in particular between 10 mbar and 20 mbar over atmospheric pressure.

The safety enclosure 4 has a vent outlet 7 configured to direct ammonia vapors to a safe location or a flare.

The safety enclosure 4 for example comprises a conduit 8 for routing said ammonia vapors to said vent outlet 7.

The purpose is to avoid that ammonia sprays and vapors dissipate into the atmosphere forming a toxic and potentially dangerous cloud which can harm an operator

The ammonia installation 1 further comprises blowers 9 configured to enhance evacuation of ammonia vapors through said vent outlet 7.

The safety enclosure 4 may be equipped with at least one safety valve and/or at least one rupture disc and/or a flap configured for the overpressure of the enclosure and configured to route the ammonia vapors to a safe location or to the flare. Such a flap may be configured to close again after the over-pressure event and can be reused.

In an embodiment, the vent is sized such that a pressure safety valve is not required.

The top of the enclosure 4 is at a height that directly counts as a safe location without further piping. This can be achieved by a tall enclosure or by locating the ammonia vaporizer 2, basin 3 and enclosure 4 at appropriate height. Said safe location is arranged at a height of at least 2 meters above surrounding structures where operator presence is frequent.

The safety enclosure 4 is at least partially dismantlable. The enclosure 4 can be, at least partially, easily dismantled to have easy access to heating tubes of the ammonia vaporizer 2 for their maintenance and/or replacement, together with an easy access to any part within the enclosure 4 that requires maintenance or repair.

The vaporizer is positioned at a distance from the internal walls of the safety enclosure 4 sufficient to permit maintenance operations on the vaporizer without requiring disassembly of the safety enclosure 4, access to the vaporizer being in particular provided via a manhole of the safety enclosure 4.

The installation 1 comprises a heating element 17 located within the basin 3 to support slow vaporization of the contained ammonia after a leak event. Evaporation leads to ammonia removal from the basin 3. Therefore, repair works can start and a potential downtime of the plant/installation can be reduced. This is especially the case after a full rupture where large amounts of ammonia have been released from the pressure equipment 2.

Piping connections within the enclosure 4 are welded.

The basin 3 comprises a sealed opening and the installation 1 comprises at least one piping extending through said sealed opening and arranged for discharging a blow down stream from said ammonia vaporizer or from said ammonia fuel vaporizer and/or arranged for draining a liquid by gravity.

Said at least one piping comprises for example a blowdown line for discharging said blow down stream.

The installation 1 may comprise an ammonia drum for receiving the discharged blow down stream,

The liquid ammonia blowdown is discharged by gravity flow to the ammonia drum.

Alternatively, the heating element can be located in or around the ammonia drum.

The blowdown line is equipped with an automatic valve configured to open upon detection of a leak and instruments relevant for measurements and/or controlling the equipment inside the safety enclosure 4 are accessible from outside the safety enclosure 4.

The pressure equipment 2 may comprise an ammonia surge drum contained within the safety enclosure 4.

The installation 1 comprises means, such as an inert gas purge system, for keeping the safety enclosure 4 oxygen free, for example means for continuously purging the enclosure with gaseous nitrogen to keep said enclosure free of oxygen.

Said means are advantageously configured to maintain said overpressure between 10 mbar and 200 mbar, in particular between 10 mbar and 20 mbar.

The safety enclosure 4 is filled with a thermal insulation medium, for example a granular insulation medium, for reducing heat losses from the pressure equipment 2. This is to insulate the equipment inside the enclosure during normal operation (without any leak).

This can partially or completely replace the direct insulation around the ammonia containing equipment and piping within the enclosure.

The installation 1 comprises an insulation layer around said enclosure 4, for reducing heat losses from the pressure equipment 2.

An insulation can also be applied inside the safety enclosure 4 directly around the vaporizer (and potentially other equipment in there).

The installation 1 may further comprise a gas conversion unit 19, and said gas conversion unit may be a reformer or an ammonia cracker.

The pressure equipment 2, typically said ammonia vaporizer, is configured to supply ammonia, in particular vaporized ammonia, as a feed to said gas conversion unit to produce hydrogen from a cracking reaction of said ammonia.

Alternatively, the pressure equipment 2, typically said ammonia fuel vaporizer, is configured to supply ammonia, in particular vaporized ammonia, as a fuel to provide heat for performing an endothermic reaction in said gas conversion unit.

The reformer is configured to produce hydrogen by hydrocarbon reforming, such as steam methane reforming (SMR) or auto-thermal reforming (ATR), which produces a hydrogen-rich syngas.

The reformer comprises catalyst filled tubes for performing said hydrocarbon reforming reaction.

The ammonia cracker comprises catalyst filled tubes for performing said cracking reaction.

The ammonia cracker is configured to produce hydrogen by autothermal cracking.

The installation 1 may comprise a tubing extending from the safety enclosure 4 to an analyzer configured to receive and analyze the gas in the enclosure.

In particular, small leaks do not trigger the temperature sensor.

The process for the production of hydrogen according to the present invention, comprises the steps of:
- providing the ammonia installation 1;
- providing liquid ammonia to the pressure equipment 2 within the installation 1;
- supplying ammonia derived from said liquid ammonia (for example vaporized ammonia) to the gas conversion unit 19 with the pressure equipment 2;
- converting the vaporized ammonia to hydrogen within the gas conversion unit 19 and/or performing a combustion reaction of said ammonia to provide heat for performing an endothermic reaction in said gas conversion unit.

The process further comprises:
- detecting a leak of liquid ammonia within the installation 1 using at least one leak detection device 15 located within the safety enclosure 4;
- activating a safety protocol upon detection of the leak.

The safety protocol includes directing ammonia vapors to a flare or safe location.

The safety protocol may include continuing the operation of the installation.

The basin 3 captures any liquid ammonia leak, while the enclosure contains and directs any vaporized ammonia or Ammonia spray to a safe disposal.

In a variant illustrated in figure 2, the basin 3 is a part of the safety enclosure 4.

The safety enclosure walls 10 are arranged as an extension of the basin walls 12.

The regions of walls of the enclosure forming the basin 3 may have a greater thickness compared to other regions of the safety enclosure 4, for instance an upper region of the enclosure.

The other regions of the safety enclosure 4, in this case, are mainly configured to reduce heat transfer and reduce the impact of ammonia sprays and gaseous ammonia dispersion in the surrounding instead of collecting and containing liquid ammonia.

An ammonia spray means in particular a gaseous ammonia with finely dispersed ammonia droplets.

## Claims

1. An ammonia cracking and/or firing installation (1) comprising:
- a pressure equipment (2) for containing liquid ammonia;
- a basin (3) positioned beneath the pressure equipment (2), configured to collect and contain liquid ammonia in the event of a leak from the pressure equipment (2);
- a safety enclosure (4) surrounding the pressure equipment (2) and arranged to contain ammonia spurts and any gaseous ammonia resulting from a liquid or gas leak from the pressure equipment (2).

2. The installation (1) according to claim 1, wherein the enclosure (4) is surrounding the basin (3) as well as the pressure equipment (2).

3. The installation (1) according to claim 1 or 2, wherein the pressure equipment (2) comprises an ammonia vaporizer.

4. The installation (1) according to any preceding claim, wherein the pressure equipment (2) comprises an ammonia pump.

5. The installation (1) according to any preceding claim, wherein the basin (3) has a volume at least equal to 40 %, or even 100% of the maximum liquid inventory in the pressure equipment (2).

6. The installation (1) according to any preceding claim, wherein the safety enclosure (4) comprises an assembly of metallic sheets.

7. The installation (1) according to any preceding claim, wherein the basin (3) is a separate component within the safety enclosure (4).

8. The installation (1) according to any one of claims 1 to 6, wherein the basin (3) is a part of the safety enclosure (4).

9. The installation (1) according to claim 8, wherein the safety enclosure (4) walls are arranged as an extension of the basin (3) walls.

10. The installation (1) according to any preceding claim, further comprising at least one ammonia leak detection device (15).

11. The installation (1) according to any preceding claim, wherein the safety enclosure (4) is configured to be maintained at an overpressure between 10 mbar and 200 mbar inside said enclosure, in particular between 10 mbar and 20 mbar.

12. The installation (1) according to any preceding claim, wherein the safety enclosure (4) has a vent outlet (7) configured to direct ammonia vapors to a safe location or to a flare.

13. The installation (1) according to any preceding claim, wherein the basin (3) comprises a sealed opening and the installation (1) comprises at least one piping extending through said sealed opening and arranged for discharging a blow down stream from said ammonia vaporizer or from said ammonia fuel vaporizer and/or arranged for draining a liquid by gravity.

14. The installation (1) according to any preceding claim, wherein the installation (1) comprises means, such as an inert gas purge system, for keeping the safety enclosure (4) oxygen free, for example means for continuously purging the enclosure with gaseous nitrogen to keep said enclosure free of oxygen.

15. A process for the production of hydrogen, comprising the steps of:
- providing an ammonia installation (1) according to any of the preceding claims;
- providing liquid ammonia to the pressure equipment (2) within the installation (1);
- with said pressure equipment (2), supplying ammonia derived from said liquid ammonia, for example vaporized ammonia, to a gas conversion unit (19);
- converting the ammonia derived from said liquid ammonia to hydrogen within the gas conversion unit (19) and/or performing a combustion reaction of said ammonia derived from said liquid ammonia to provide heat for performing an endothermic reaction in said gas conversion unit.
